# EUROPEAN PATENT SPECIFICATION

(11) **EP 1 754 765 B1**
(45) Date of publication and mention of the grant of the patent: **16.09.2015**
(21) Application number: 06254195.8
(22) Date of filing: 09.08.2006
(51) Int. Cl.: C09J 11/00

(54) **Polymeric diluents for structural adhesives**
Polymere Verdünnungsmittel für Strukturklebstoffe
Diluants polymères pour adhésifs structurels

(30) Priority: 15.08.2005 US 708160 P
(43) Date of publication of application: 21.02.2007
(73) Proprietor: Rohm and Haas Company, Philadelphia, PA 19106-2399 (US)
(72) Inventor: Richards, James L., Woodstock, Illinois 60098 (US)
(74) Representative: Kent, Venetia Katherine

(56) References cited:
- EP-A- 1 318 182
- EP-A- 1 642 915
- EP-A1- 0 947 529
- EP-A2- 0 302 620
- WO-A-00/50236
- WO-A-96/40811
- WO-A-98/54270
- WO-A-03/011947
- WO-A-03/033562
- WO-A-2004/046217
- DE-C1- 10 218 718
- US-A1- 2004 140 055
- US-A1- 2005 159 575

## Description

The present invention relates to alternative compositions to reactive diluents used in structural adhesives, including reactive hot melt adhesives. More particularly, the invention is directed to use of polymeric, liquid moisture cured reactive hot melts that function as reactive diluents to extend the working time of structural adhesives, including but not limited to reactive hot melt adhesives, when preparing bonded laminates.

Structural adhesives such as reactive hot melts are limited by their working time, green strength and creep rate when preparing bonded laminates. Low molecular weight organic compounds, including volatile organic compounds, known as reactive diluents are employed to extend the working time of structural adhesives by maintaining a fluid state. Conventional reactive diluents suffer a number of limitations, namely, they are not only physiologically harmful but possess distinct and characteristic negative taste and smell characteristics. The degree of cross-linking achievable in such reactive diluents, being only in the vicinity of less than 90%, ensures that they cannot be used to finish packaging laminates and bonded laminates. In addition, conventional reactive diluents have the disadvantage that, as residues in parts per million amounts, they are not cross-linked and negatively influence adhesion to the boundary surface, since they are able to disperse much like solvents.

European Patent Application EP 1642915 A2 discloses reactive hot-melt adhesive compositions; United States Patent Application US 2005/0159575 A1 discloses aqueous polyurethane-polyurea dispersions that are stabilized with respect to thermal yellowing; German Patent Application DE 10218718 C1 discloses a method for consolidating geological formations in underground coal mining; United States Patent Application US 2004/0140055 A1 discloses adhesive additives that are used in conjunction with polyisocyanate resins to form adhesive compositions; International Patent Application WO 2004/046217 A1 discloses blocked polyurethane prepolymers; European Patent Application EP 1318182 A1 discloses moisture-reactive hot-melt adhesive compositions; International Patent Application WO 03/033562 A1 discloses reactive polyurethane compositions with low residual monomer content; International Patent Application WO 03/011947 A1 discloses formulations that are useful for preparing isocyanate-based polymers; International Patent Application WO 00/50236 discloses solvent-free, moisture-curable, reactive hot-melt adhesive compositions; European Patent Application EP 0947529 A1 discloses polyurethane prepolymers that contain latent amino groups and isocyanate groups; International Patent Application WO 98/54270 discloses hydroxylated polydiene-based hot-melt adhesive compositions; International Patent Application WO 96/40811 discloses aqueous non-gelling, anionic polyurethane dispersions; and European Patent Application EP discloses cross-linkable hot-melt adhesive compositions.

U. S. Provisional Patent Application Ser. No. 60/615,668 discloses moisture-reactive reactive hot melt adhesive compositions having improved creep resistance and having good adhesion to substrates. The reactive hot melt adhesive composition comprises: (a) one or more polymers having a weight average molecular weight between 30,000 and 100,000; (b) one or more multifunctional polyols; (c) one or more organic compounds having at least two hydroxy groups; and (d) one or more polyisocyanates, wherein the ratio of isocyanate groups to hydroxyl groups (NCO/OH) is between 2.1 and 6.0 and wherein the amount of free isocyanate groups is greater than 3.5 percent by weight, based on the total weight of the composition. Unfortunately, the working time of the adhesive composition is relatively short, which can be limiting when applying it to large area substrates to form bonded structural laminates.

Low molecular weight liquid moisture reactive hot melts have been discovered that unexpectedly function as reactive diluents in structural adhesives and are free of problems associated with conventional reactive diluents. The reactive moisture curing compositions are unconventional reactive diluents that extend the working time of structural adhesives; this feature is significant as it relates to manufacturing large area bonded structural laminates without adversely affecting creep.

Accordingly, the invention provides an adhesive composition comprising: (A) a moisture reactive hot melt adhesive comprising (a) one or more polymers having a weight average molecular weight between 30,000 and 100,000; (b) one or more multifunctional polyols; (c) one or more organic compounds having at least two hydroxy groups; and (d) one or more polyisocyanates; and (B) a liquid polymeric moisture reactive diluent comprising: (i) one or more polymers having a weight average molecular weight between 2000 and 4000; (ii) one or more multifunctional polyols; and (iii) one or more polyisocyanates, wherein the ratio of isocyanate groups to hydroxyl groups (NCO/OH) is between 4.0 and 11.0 and wherein the amount of free isocyanate groups is greater than 7.5% by weight, based on the total weight of the composition.

The invention also provides a method for bonding one or more substrates comprising the steps of:
(A) admixing a moisture reactive hot melt adhesive comprising (a) one or more polymers having a weight average molecular weight between 30,000 and 100,000; (b) one or more multifunctional polyols; (c) one or more organic compounds having at least two hydroxy groups; and (d) one or more polyisocyanates; and (B) a liquid polymeric moisture reactive diluent comprising: (i) one or more polymers having a weight average molecular weight between 2000 and 4000; (ii) one or more multifunctional polyols; and (iii) one or more polyisocyanates, wherein the ratio of isocyanate groups to hydroxyl groups (NCO/OH) is between 4.0 and 11.0 and wherein the amount of free isocyanate groups is greater than 7.5% by weight, based on the total weight of the composition;
(b) heating the reactive hot melt adhesive;
(c) applying the hot melt adhesive to a first substrate in the presence of moisture;
(d) contacting the applied hot melt adhesive with at least a second substrate; and
(e) cooling the bonded hot melt adhesive.

As used herein, "moisture-reactive" is meant herein any composition, including but not limited to any compositions containing isocyanate groups for example, which are capable of reacting with water desirably to effect an increase in the molecular weight of the composition and/or effect cross-linking of an adhesive composition so as to increase the strength properties of the adhesive subsequent to being contacted with water. By "hot-melt" is meant herein any appropriate adhesive which may be a solid, semi-solid, or viscous mass can be advantageously heated to provide a fluid adhesive of a viscosity suitable for application to and adhesion to substrates.

The composition usefully employed in accordance with the present invention that functions as a polymeric reactive diluent is any moisture-reactive composition having lower weight average molecular weight that is admixed with its corresponding chemically and/or structurally related reactive hot melt composition, having an appropriately larger weight average molecular weight. A conventional low weight average molecular weight moisture-reactive composition alone is not a suitable structural adhesive for preparing large area bonded laminates. However, addition of the low weight average molecular weight polymeric moisture reactive composition to the chemically and/or structurally related reactive hot melt composition extends the working time of the reactive hot melt composition when manufacturing bonded laminates without adversely affecting creep.

The moisture reactive composition that functions as a useful polymeric reactive diluent for a hot melt adhesive includes one or more low molecular weight polymer components. Suitable low molecular weight components include, but are not limited to for example, polymers having a weight average molecular weight (Mw) between 1,000 and 20,000, including polymers having a Mw between 2,000 and 10,000 and including polymers having a Mw between 2,000 and 7,000. Examples of low molecular weight polymers include, but are not limited to for example, any suitable polymers such as (meth)acrylic polymers, copolymers and terpolymers, polyurethane polymers and copolymers, polysiloxane polymers, polyesters, polyvinyl polymers, polystyrene (PS), PS copolymers, and blends of such polymers. Other suitable low molecular weight polymer component include hydroxy functionality of at least one.

The moisture reactive polymeric diluent composition includes one or more multifunctional polyols. Suitable multifunctional polyols include, but are not limited to for example, diols, triols, tetraols, pentaols, hexaols, polyester polyols, polyether polyols, polyetheramine polyols polymer blends thereof, and mixtures thereof. The multifunctional polyol component is present in amounts from 0 to 80 percent by weight, based on the total weight of the moisture reactive composition. Suitable polyol components include, but are not limited to for example, polymers having a weight average molecular weight (Mw) between 400 and 10,000, including polymers having a Mw between 2,000 and 7,000, including polymers having a Mw between 2,000 and 5,000. Other examples of suitable polyols include oligomers and polymers prepared from hydroxypropanoic acid and other fermentation products of a biomass (e.g. sugars).

The moisture reactive polymeric diluent composition also includes one or more polyisocyanates bearing at least two isocyanate groups. Suitable polyisocyanates include but are not limited to for example aromatic, aliphatic, cycloaliphatic polyisocyanates and combinations thereof, such as, for example, m-phenylene diisocyanate, 2,4-toluene diisocyanate, 2,6- toluene diisocyanate, hexamethylene diisocyanate, tetramethylene diisocyanate, 1,4-cyclohexane diisocyanate, hexahydrotoluene diisocyanate, 1,5-naphthalene diisocyanate, 1-methoxy-2,4-phenylene diisocyanate, 4,4'- diphenylmethane diisocyanate, 2,4'-diphenylmethane diisocyanate, 4,4'-biphenylene diisocyanate, 3,3'-dimethoxy-4,4'-biphenyl diisocyanate, 3,3'-dimethyl-4,4'-biphenyl diisocyanate, 3,3'-dimethyl- 4,4'-diphenylmethane diisocyanate, isophorone diisocyanate, 4,4',4"-triphenylmethane triisocyanate, 1,3,5-triisocyanato benzene, 2,4,6- triisocyanato toluene, 4,4'-dimethyldiphenylmethane-2,2',5,5'-teratisocyanate, polymethylene polyisocyanate, polyphenylene polyisocyanate, 2,4,6-toluene triisocyanate, 4,4'-dimethyl-diphenylmethane tetraisocyanate, and pre-polymers having number average molecular weights Mn less than 2000 and bearing at least two isocyanate groups, and mixtures thereof. The polyisocyanate component is present in amounts from 1 to 30 percent by weight, based on the total weight of the moisture reactive composition.

The ratio of isocyanate groups to hydroxyl groups (NCO/OH) in the polymeric reactive diluent composition from all of the admixed components taken on an equivalents basis is between 4.0 and 11.0 and the amount of free isocyanate groups is greater than 7.5% by weight, based on the total weight of the composition.

The reactive hot melt (RHM) adhesive composition includes one or more high molecular weight polymer components. Suitable high molecular weight components are polymers having a weight average molecular weight (Mw) between 30,000 and 100,000, including polymers having a Mw between 45,000 and 100,000. Examples of high molecular weight polymers include, but are not limited to for example, any suitable thermoplastic polymers such as (meth)acrylic polymers, copolymers and terpolymers, polyurethane polymers and copolymers, polysiloxane polymers, polyesters, polyvinyl polymers, polystyrene (PS), PS copolymers, divinylbenzene polymers and copolymers, copolymers and terpolymers of ethylene, polyetheramides, polyethers and blends of such thermoplastic polymers. Other suitable high molecular weight polymer component include hydroxy functionality of at least one. High molecular weight polymer components having hydroxyl functionality have hydroxyl numbers from 1 to 15. A description of how to determine hydroxyl number for a composition is found in texts well known in the art, for example, G. Woods, The ICI Polyurethanes Book, 2nd Ed., ICI Polyurethanes, Netherlands (1990). Suitable examples include, but are not limited to for example, polyvinylalcohols (PVOH) having Mw of 20,000 or more, PVOH copolymers, poly(hydroxy)acrylate polymers, polyvinylether/polyvinylacohol copolymers, thermoplastic polymers whose chemical skeletons are derived from a biomass, polymer blends thereof and polymer blends of the thermoplastic polymers having hydroxy functionality and thermoplastic polymers having no hydroxy functionality. The RHM composition includes one or more high molecular weight polymer components in an amount from 1 to 30 percent by weight, based on the total weight of the composition.

The reactive hot melt composition also includes one or more multifunctional polyols. The term "multifunctional polyols" refers to polyols bearing at least two hydroxyl groups per chain. Suitable multifunctional polyols include, but are not limited to for example, diols, triols, tetraols, pentaols, hexaols, polyester polyols, polyether polyols, polyetheramine polyols polymer blends thereof, and mixtures thereof. The multifunctional polyol component is present in amounts from 0.1 to 80 percent by weight, based on the total weight of the RHM adhesive composition. Suitable polyol components include, but are not limited to for example, polymers having a weight average molecular weight (Mw) between 400 and 10,000, including polymers having a Mw between 2,000 and 5,000. Other examples of suitable polyols include oligomers and polymers prepared from hydroxypropanoic acid and other fermentation products of a biomass (e.g. sugars).

Polyester polyols suitable for use in the present invention include those formed from diacids, or their monoester, diester, or anhydride counterparts, and diols. The diacids may be saturated C₄-C₁₂aliphatic acids, including branched, unbranched, or cyclic materials, and/or C₈-C₁₅aromatic acids. Examples of suitable aliphatic acids include, for example, succinic, glutaric, adipic, pimelic, suberic, azelaic, sebacic, 1,12-dodecanedioic, 1,4-cyclohexanedicarboxylic, and 2-methylpentanedioic acids. Examples of suitable aromatic acids include, for example, terephthalic, isophthalic, phthalic, 4,4'-benzophenone dicarboxylic, 4,4'-diphenylamine dicarboxylic acids, and mixtures thereof. The diols may be C₂-C₁₂branched, unbranched, or cyclic aliphatic diols. Examples of suitable diols include, for example, ethylene glycol, 1,3-propylene glycol, 1,2-propylene glycol, 1,4- butandediol, neopentyl glycol, 1,3-butandediol, hexanediols, 2-methyl-2,4- pentanediol, cyclohexane-1,4-dimethanol, 1,12-dodecanediol, and mixtures thereof. Other suitable polyester polyols usefully employed in accordance with present invention include polyols prepared from acid dimers and/or dimeric diols. Mixtures of the various suitable polyester polyols are also suitable for use in the present invention.

According to one embodiment of the invention, the polyester polyols are semi-crystalline to crystalline. According to a separate embodiment, the polyester polyols are amorphous, which means that they do not crystallize under ambient conditions. Both the semi-crystalline and amorphous polyols preferably have a weight-average molecular weight ("Mw") as measured by gel permeation chromatography, from 250 to 10,000, including from 250 to 5,000, and have an acid number less than 5, including an acid number less than 2. Amorphous polyester polyols are preferably aromatic such as those formed from phthalic anhydride and diethylene glycol. Mixtures of the various suitable semi-crystalline and amorphous polyester polyols are also suitable for use in the present invention. The amount of at least one amorphous or semi-crystalline polyester is between 30 to 70 % by weight, based on the weight of the adhesive composition.

Polyether polyols suitable for use in the present invention include polyoxy-C₂-C₆-alkylene polyols, including branched and unbranched alkylene groups. Polyether polyols may be prepared by the reaction of an alkylene oxide with a polyhydric alcohol. Examples of suitable polyether polyols include, for example, polyethylene oxide, poly(1,2- and 1,3-propyleneoxide), poly(1,2-butyleneoxide), random or block copolymers of ethylene oxide and 1,2-propylene oxide, and mixtures thereof. The preferred polyether polyol is polypropylene glycol. The polyether polyol preferably has a weight average molecular weight ("Mw") as measured by gel permeation chromatography, from 400 to 8,000, more preferably from 1,000 to 3,000. Mixtures of the various suitable polyether polyols are also suitable for use in the present invention.

The reactive hot melt composition also includes one or more organic compounds having at least two hydroxy groups. Suitable organic compounds having a weight average molecular weight (Mw) between about 100 and 10,000, including polymers having a Mw between about 100 and 5,000. The organic components having at least two hydroxyl functionalities have hydroxyl numbers from 10 to 2000, including hydroxyl numbers from 10 to 1500, from 10 to 1000 and from 10 to 500. Suitable organic compounds include, but are not limited to for example, diols, triols, tetraols, pentaols, hexaols, esters of unsaturated fatty acids, esters of saturated fatty acids, fats, oils, cottonseed oils, linseed oils, olive oils, palm oils, corn oils, peanut oils, soybean oils, and castor oils. Oils include oils modified by hydrogenation and polyoxyalkene polymers, such as polyoxyethylene polymers and include for example hydrogenated oils, partially hydrogenated oils, and polyoxyethylene oils. The amount of the organic component having at least two hydroxyl functionalities is between is between 1 and 15 % by weight, based on the weight of the adhesive composition.

The reactive holt melt composition also includes one or more polyisocyanates bearing at least two isocyanate groups. Suitable polyisocyanates include but are not limited to for example aromatic, aliphatic, cycloaliphatic polyisocyanates and combinations thereof, such as, for example, m-phenylene diisocyanate, 2,4-toluene diisocyanate, 2,6-toluene diisocyanate, hexamethylene diisocyanate, tetramethylene diisocyanate, 1,4-cyclohexane diisocyanate, hexahydrotoluene diisocyanate, 1,5-naphthalene diisocyanate, 1-methoxy-2,4-phenylene diisocyanate, 4,4'- diphenylmethane diisocyanate, 2,4'-diphenylmethane diisocyanate, 4,4'-biphenylene diisocyanate, 3,3'- dimethoxy-4,4'-biphenyl diisocyanate, 3,3'-dimethyl-4,4'-biphenyl diisocyanate, 3,3'-dimethyl- 4,4'-diphenylmethane diisocyanate, isophorone diisocyanate, 4,4',4"-triphenylmethane triisocyanate, 1,3,5-triisocyanato benzene, 2,4,6-triisocyanato toluene, 4,4'-dimethyldiphenylmethane-2,2',5,5'-teratisocyanate, polymethylene polyisocyanate, polyphenylene polyisocyanate, 2,4,6-toluene triisocyanate, 4,4'-dimethyl-diphenylmethane tetraisocyanate, pre-polymers having number average molecular weights Mn less than 2000 and bearing at least two isocyanate groups, and mixtures thereof. The polyisocyanate component is present in amounts from 14 to 30 percent by weight, based on the total weight of the RHM adhesive composition.

The ratio of isocyanate groups to hydroxyl groups (NCO/OH) in the reactive hot melt adhesive compositions groups from all of the admixed components taken on an equivalents basis is between 2.1 and 6.0, including from 2.2 to 4.0, including greater than 3.0 and including 3.5 or greater; in order to provide an adhesive composition with an excess of isocyanate groups.

Another useful method of characterizing the admixture of the components of the present invention is the free NCO content. The free NCO content is the weight %, based on the total weight of the admixture, of free NCO. Free NCO is the amount of NCO in excess of the amount needed to match the OH groups in the admixture on a 1:1 equivalents basis. In the practice of the present invention, suitable compositions have free NCO content of at least 3.5%, including 3.5% to 20%, and including 3.5% to 7%. Without being limited to theory, it is believed that increasing the NCO/OH ratio and the free NCO content leads to a cured adhesive composition with higher concentration of cross-links, which in turn leads to improved creep resistance.

The components of the reactive hot melt adhesive and the polymeric reactive diluent composition are mixed by conventional means, preferably in an inert, dry atmosphere, and reacted, preferably at a temperature of 50°C to 120°C, for a time sufficient to convert essentially all hydroxy groups to corresponding urethane groups. The polymer components are solubilized by heating and mixing with at least one of the non-isocyanate containing components before the reaction with the polyisocyanate. Optionally, a catalyst such as, for example, a tertiary amine or a tin-based catalyst may be admixed with the components, either before, during, or after the reaction to form the adhesive composition. When such an optional catalyst is used, the usual use level is less than 0.3% by weight based on the total weight of the admixed components. The adhesive composition having increased extended working time is stored, preferably under an inert, dry atmosphere until use.

The hot-melt adhesive composition may be formulated by admixing additional conventional ingredients such as chain extenders, fillers, pigments, tackifiers, plasticizers, rheology modifiers, and other appropriate additives with due regard to the reactivity of the NCO-functional groups, which is desirably maintained. According to one embodiment, the amount of chain extenders added is between 0 and 10 % by weight, based on the weight of the RHM adhesive composition.

According to one embodiment of the present invention, the components include at least one hydroxyl-functional triglyceride or at least one trifunctional polyol of one or more fatty acids. Hydroxyl-functional triglycerides of fatty acids have the chemical formula CH ₂OR¹-CHOR¹-CH₂OR³, where R¹, R², and R³ are residues of fatty acids, which may be the same or different, at least one of which has hydroxyl functionality.

In the method for bonding substrates of the present invention, the reactive hot-melt adhesive having extended working time is heated in order to achieve a viscosity suitable for transporting the adhesive, such as by pumping or gravity feed, to the application equipment and for the application of the adhesive to a first substrate in the presence of moisture. The temperature should be high enough to achieve a suitable viscosity but low enough to avoid excessive degradation or other undesirable effects on the adhesive. Typical useful temperatures are in the range of 40°C to 200°C, preferably 50°C to 160°C, and more preferably 100°C to 150°C. The application of the adhesive may be effected by conventional means such as, for example, heated spray applicator, heated bead applicator, heated nozzle, and heated roll coater, to form a continuous or discontinuous film of adhesive, as desired. The adhesive may typically be applied at a level of 50 to 250 g/sq. meter (4-20 g/sq ft) although in cases where one of the substrates is a fabric it may be applied at a level as low as 1-50 g/sq. meter. It is contemplated that the moisture, *i.e.,* water, which is anticipated to effect reaction with the NCO-functional groups thereby increasing the ultimate cohesive strength of the applied adhesive, may be, for example, a result of ambient humidity, artificially increased or controlled humidified air, a mist of water droplets, or a spray of liquid water contacting the applied adhesive. It is further contemplated that the moisture may be augmented by other NCO-functional group-reactive ingredients such as, for example, amines.

The applied adhesive is contacted by a second substrate to provide a composite construction. The composite construction so formed is optionally subjected to applied pressure such as by passing it between rollers to effect increased contact of the substrates with the adhesive and the composite construction is then cooled or allowed to cool. In another embodiment the adhesive may be simultaneously or sequentially applied to two surfaces of the first substrate, which adhesive-coated surfaces are then simultaneously or sequentially bonded to two further substrates, which may be the same or different. It is further contemplated that the composite construction may subsequently be bonded to other substrate(s) using the same or a different adhesive before or after the process described herein. The first and second substrates to be bonded in the method of this invention may be the same or different and include, for example, metal, wood, consolidated wood products, paper, woven and non-woven fabrics, and plastics which may have smooth or structured surfaces and are provided in the form of rolls, sheets, films, foils, etc. They include, for example, lauan mahogany plywood, impregnated paper, extruded polystyrene foam, expanded polystyrene foam, fiberglass reinforced polyester, polyester fabric, high or low pressure laminate, plywood, aluminum, steel, PVC, and engineering plastics.

In some embodiments of the present invention, the substrates that are bonded are relatively thin and flat, and in such cases the composite article is a called a laminate or laminated structure. In other embodiments the substrates are not thin or flat.

According to one embodiment, the structural adhesive having extended working time will meet the ICC AC05 building code requirement for a number of years.

A recently developed structural adhesive which is described U. S. Provisional Patent Application Ser. No. 60/615,668 complies with the requirements of ICC AC05. In some embodiments, however, this product however, only has 2 minutes of working time and is targeted for the Structural Insulated Panel (SIP) market. This is a laminate comprised of oriented strand board bonded to both sides of expanded polystyrene (EPS) insulation. This panel is used in the building market to construct structures that can be used for industrial or residential use. The polymeric diluent and the adhesive prepared from it enables the SIPs manufacturer to make improvements in production efficiency over the conventional methods of manufacturing, leading to improved through put. However, with only 2 minutes of working time, the structural adhesive is limited to use in constructing relatively small area panels, including for example 4' X 8' panels. It is desirable to construct larger panels, including for example 8' X 24' panels, which requires structural adhesives having extended working times.

It was discovered that adding from 1 to 10% by weight of the liquid polymeric reactive diluent composition (prior to the addition of catalyst) unexpectedly functions as a reactive diluent for the reactive hot melt adhesive described above. According to one embodiment, by introducing an amorphous polymeric diluent composition to the structural adhesive which meets ICC AC 05 building code criteria, the working time of the structural adhesive is significantly extended. Advantages of the polymeric diluent composition are that it completely reacts (up to > 80 % and including 100%) when admixed with the reactive hot melt adhesive and does not negatively impact the creep resistance of the reactive hot melt. In fact, the addition of the polymeric reactive diluent may actually improve it through additional cross link density. Another advantage of the polymeric diluent is that by being a liquid polyurethane, the moisture reactive composition is compatible (compatibility also refers to the polymeric diluent being chemically and or structurally related to the RHM used), soluble or miscible in the reactive hot melt. Conventional reactive diluents adversely effect pressure sensitive performance of the reactive hot melt in proportion to the amount added. It was surprising to discover that addition of the liquid moisture reactive composition improves the adhesion to the oriented strand board, which was an issue in developing the reactive hot melt in the first place. In addition the moisture reactive compound improves wetting of the strand board.

According to one embodiment, the amorphous moisture reactive liquid polymer composition functioned as a reactive diluent without catalyst. This particular polymeric diluent is used to prevent the degradation of the hot melt thermal stability because of any additional catalyst.

The following examples are presented to illustrate the invention and the results obtained by the test procedures.

### Test Procedures

### Preparation of specimens:

Specimens are sandwich laminates of oriented strand board (OSB), adhesive, expanded polystyrene foam, adhesive, and OSB, prepared according to procedures published by the International Conference of Building Officials (ICBO), in "Acceptance Criteria For Sandwich Panel Adhesives," #AC05.

### Hand Failure:

A sandwich laminate specimen is cut to width of approximately 5 to 7.5 cm (2 to 3 inches). One piece of OSB is secured, and force is exerted by hand on the other piece of OSB until the sandwich comes apart, and the failure mode is observed. The "pass" failure mode is for the polystyrene foam to separate. The "fail" failure mode is adhesive failure of the adhesive at any of the bonding surfaces.

### High Temperature Creep:

Following ICBO acceptance criteria AC05-8.3, sandwich specimens comprising metal bonded to a hard wood (maple) were subjected to stress of 345 kPas (50 psi) and the deformation observed. To pass, creep is limited to 0.002 in/in (0.0508 mm/mm) in the first hour with an average of 0.005 in/in (0.127 mm/mm) for the duration of the test. Samples are tested according to section 8.6.3; 158°F (70°C) for one week when measuring the creep of wooden substrates or at 182°F (83°C) for one week where bonded metal surfaces are involved.

### High Temperature Lap Shear:

Following ICBO acceptance criteria AC05-8.4, conditioned sandwich specimens were equilibrated to a glue line temperature of 182°F (83°C) and tested for lap shear strength. To pass, test specimens must retain at least 80% of the lap shear strength as specimens tested with the glue line at 73°F (23.7°C).

### Accelerated Aging

Following ICBO acceptance criteria AC05-7.2, sandwich specimens were subjected to submersion in water at room temperature for 48 hours followed by drying for eight hours at 145°F (63°C). The samples are subsequently submitted to three cycles of soaking at room temperature for 16 hours and drying for eight hours at 145°F (63°C). The samples are conditioned for seven days according to section 6.0 prior to testing. To pass, samples must retain at least 80% of the original bond strength of test specimens not subjected to accelerated aging.

### EXAMPLES

### REACTIVE HOT MELT COMPONENT

A reactive hot melt adhesive (Mor-Melt™ R-5022, Rohm and Haas Company, Philadelphia, Pennsylvania) having a working time of 1.5 minutes was used as a control.

### POLYMERIC MOISTURE REACTIVE COMPOSITION (MRC) AS REACTIVE DILUENT

Uncatalyzed, polymeric liquid moisture reactive compositions (PMRC) were prepared.

### PMRC1

| **Component** | **Wt.%** |
|---|---|
| Rubinate M™, Lupranate M-20S™, or Mondur MR™ (light) | 28.70 |
| MDI | 11.68 |
| Luprinate MI™ | 1.24 |
| P-2010™ | 58.3 |
| Foamblast™ 20F | 0.006 |
| BC | 0.033 |
| Blankophor SOL™ | 0.02 |
| **Total Wt.** | **100** |

| | |
|---|---|
| MDI: diphenylmethane diisocyanates, mixture of isomers, namely 2, 4'-MDI and 4,4'-MDI. | |

### PMRC 2

| **Component** | **Wt.%** |
|---|---|
| Rubinate M^{™}, | |
| Lupranate M- | |
| 20S^{™}, or Mondur | |
| MR^{™} (light) | 57.56 |
| P-2010^{™} | 39.38 |
| Santicizer 160^{™} | 3.01 |
| BC | 0.049 |
| Blankophor | |
| SOL^{™} | 0.02 |
| **Total Wt.** | **100** |

### PMRC3

| **Component** | **Wt.%** |
|---|---|
| Rubinate M^{™}, | |
| Lupranate M- | |
| 20S^{™}, or Mondur | |
| MR^{™} (light) | 12.58 |
| Luprinate MI^{™} | 23.6 |
| P-2010^{™} | 40.7 |
| Poly G 55-56^{™} | 20.3 |
| DIDP | 0.75 |
| Tufflo 6006^{™} | 1.98 |
| Foamblast^{™} 20F | 0.007 |
| BC | 0.018 |
| Blankophor SOL^{™} | 0.02 |
| **Total Wt.** | **100** |

A SIP comprises OSB bonded to both sides of EPS. To facilitate the use of small amounts of adhesive and for expediency, one side a section of 1# EPS to 7/16" OSB was pre-laminated using Mor-Melt™ R-5022. This was then cut into 6" X 12" pieces. Matching sections of OSB were also prepared as the mating facing material. This would allow us to coat one bond line and enable us to determine open time.

PMRC-3 as reactive diluent.

A 500 g aliquot of Mor-Melt™ R-5022 was added to a glass reactor, preheated to 90°C and flushed with dry nitrogen. To that we added 5% by weight of MRC-3. PMRC-3 has a cured Young's modulus of 6000 psi and a viscosity of 4500 cps.

The mixture was held at 90°C until it was homogenized. The material was then transferred to a Black Bros. hot melt roll coater, set to an oil temperature of 310°F. The adhesive application rate was set using the same density EPS that was used as a core material. Once an application rate of 12 g/sq.ft. was achieved, the pre-laminated panel was coated, applying the adhesive to the EPS. The panel was set aside for the prescribed working time desired, then the mating section of OSB was applied. The completed SIPS panel was then nipped twice using a Black Bros. nip laminator set for a 3/16" compression of the panel. Once that was done, the panel was laid aside to stand under laboratory conditions for one hour.

At the end of one hour, the 6" X 12" panel was cut lengthwise, in two. With one half, an inch of the EPS was removed from one end, placed in a vice, clamping one of the OSB faces. A pry bar was then inserted between the vice face and the outer section of OSB, and the facer slowly pried away from the core until the panel failed. This was done for each panel made at a particular working time.

A marked increase in working time was achieved using PMRC-3 as a reactive diluent; from 1.5 min. for Mor-Melt™ R-5022 (no reactive diluent added) to 5.5 min. as gauged by the EPS tear at one hour from lamination.

PMRC- 2 as reactive diluent.

PMRC-2 has a higher Young's modulus (27000 psi) and is higher in viscosity (8000 cps@ 25°C). PMRC-2 was added at 5% by weight to Mor-Melt™ R-5022. The laminates were prepared as before. The results were as follows:

An open time, as measured by the EPS core failure of 4.5 minutes was achieved. To verify this we constructed another batch of reactive hot melt using the PMRC-0 base as the reactive diluent to Mor-Melt™ R-5022 at 5% by weight addition.

The same lamination procedure was used for the system utilizing PMRC-0.

Again, open times of 5.5 min. were achieved using PMRC-0, comparable to PMRC-1. The intrinsic viscosity of PMRC-0 is 5000 cps, very close to that of the PMRC-1. Initially, it appeared that the lower viscosity moisture reactive compositions yielded longer open times as reactive diluents for Mor-Melt™ R-5022. However, it was noted that after 24 hours, the panels made with PMRC-3 showed marked improvement also.

Panels made with the PMRC-1 showed some improvement in the bond quality beyond the initial 5.5 min. open time but not complete core failure.
Failure mode improved after 24 hours with the PMRC-3 as reactive diluent. In fact observed core failure out to 7 minutes was observed.
The same effect was seen with the PMRC-1 reactive diluent, was observed with the PMRC-0 reactive diluent.

In addition to maximum working time determination, thermal stability of panels was examined. Adding 100% reactive liquid moisture curing compositions to Mor-Melt™ R-5022 required ensuring that hot melt adhesive would be stable under the temperature it would encounter on the rolls.

Viscosity versus time was measured using a Brookfield Thermacell^{™} viscometer, monitoring viscosity over a six hour period at 260°F. The results are summarized in Table 1.

**Table 1**

| Strength vs time plywood-plywood@ 12 g/sq.ft. | | | |
|---|---|---|---|
| Flatwise Tensile Str. (psi) | | | |
| | | Mor-Melt^{™} R- | |
| | Mor-Melt^{™} R- | 5022+9% | Mor-Melt^{™} R-5022 + |
| Time (min.) | 5022 | PMRC-1 | 9% PMRC-2 |
| 1 | 1.4 | 1.7 | 0.9 |
| 2 | 5.6 | 5 | 3 |
| 3 | 12.9 | 11 | 4.4 |
| 4 | 17 | 13 | 7 |
| 5 | 19.1 | 13.5 | 9.5 |
| 6 | 24 | 17.2 | 18.2 |
| 7 | 26.4 | 18 | 14.5 |
| 8 | | | |
| 10 | 36.9 | 24 | 18.9 |
| 11 | 39 | 20.6 | 26 |
| 12 | 42 | 28 | 36.5 |
| 15 | | 31.3 | 31.5 |

Addition of moisture reactive compositions PMRC-1 and PMRC-2 to Mor-Melt™ R-5022 exhibited as good or better thermal stability when used in bonded structural panels as compared to Mor-Melt™ R-5022 control.
With such marked improvement in open time of the reactive hot melt with the addition of only 5% liquid moisture reactive compositions, the percentage of diluent was increased to observe the effects.
PMRC-1 (9% by weight) was added to Mor-Melt™ R-5022 and laminates were constructed the same as before. The open time, as gauged by core failure, markedly increased to 8 min.

PMRC-2 (9% by weight) was also added to Mor-Melt™ R-5022. Sample SIPS constructions were made up at 3, 4, 5, 6, 6.5, 7, 7.5, 8, and 8.5 min. open times. The resulting panels were cut in half lengthwise. One half was destructively tested at 1 hr from lamination. Results of testing showed an EPS core failure only up to 5 minutes of working time. At six minutes working time, some adhesive failure to OSB was observed.
PMRC-3 (9% by weight) was also added to Mor-Melt™ R-5022. PMRC-3 does not perform as well as the PMRC-1. Consistent core failure beyond 5 min. at the 1 hr mark is not observed, even though after 24 hrs it shows core failure up to 8 min. Originally, at 5% by weight PMRC-3, core failure up to 4.5 min was observed. By increasing the diluent level to 8% by weight, 0.5 and 1.0 min. of working time is gained.

Strength development of bonded laminates using Mor-Melt™ R-5022 as a control and using reactive diuents was also evaluated. The results are summarized in Table 2.

**Table 2**

| Strength vs time plywood-plywood@ 12 g/sq.ft. | | | |
|---|---|---|---|
| Flatwise Tensile Str. (psi) | | | |
| | | Mor-Melt^{™} R- | Mor-Melt^{™} R- |
| Time | Mor-Melt^{™} | 5022 + 9% | 5022+9% |
| (min.) | R-5022 | PMRC-1 | PMRC-3 |
| 1 | 1.4 | 1.7 | 0.9 |
| 2 | 5.6 | 5 | 3 |
| 3 | 12.9 | 11 | 4.4 |
| 4 | 17 | 13 | 7 |
| 5 | 19.1 | 13.5 | 9.5 |

Results for initial strength development indicate that within the first five minutes, Mor-Melt™ R-5022 and PMRC-1 as a reactive diluent, actually develops faster than Mor-Melt™ R-5022 and PMRC-3 as a reactive diluent. From that data, it is seen that PMRC-1 as a reactive diluent does not adversely affect the strength development within the first couple of minutes as PMRC-3 does. The strength rapidly grows to beyond that required to tear the 1# density EPS core within the first couple of minutes, whereas it requires in excess of four minutes to grow past the 8 psi level for Mor-Melt™ R-5022 and PMRC-3.

High temperature creep requirements required for ICC AC 05 certification were evaluated for Mor-Melt™ R-5022 and moisture reactive compositions. Aluminum-Douglas Fir creep specimens were constructed, using 12 g/sq.ft. of Mor-Melt R-5022 with 5% PMRC-1. The data is summarized in Table 3.

**Table 3**

| Creep testing for Mor-Melt^{™} R-5022 + 5% PMRC-1 | | | | |
|---|---|---|---|---|
| | Creep in inches | | | |
| Time | 1 | 2 | 3 | 4 |
| Hour 0 | 0 | 0 | 0 | 0 |
| 1 | 0 | 2 | 1 | 0 |
| 2 | 2 | 3 | 1 | 1 |
| 3 | 2 | 3 | 1 | 1 |
| 4 | 2 | 4 | 2 | 1 |
| 5 | 2 | 4 | 2 | 1 |
| 6 | 2 | 4 | 2 | 1 |
| 7 | 2 | 4 | 2 | 1 |
| 8 | 2 | 4 | 2 | 2 |
| Day 1 AM | 2 | 4 | 2 | 2 |
| Day 1 PM | 2 | 4 | 2 | 2 |
| Day 2 AM | 2 | 4 | 2 | 2 |
| Day 2 PM | 2 | 4 | 2 | 2 |
| Day 3 AM | 2 | 4 | 2 | 2 |
| Day 3 PM | 2 | 4 | 2 | 2 |
| Day 4 AM | 2 | 4 | 2 | 2 |
| Day 4 PM | 2 | 4 | 2 | 2 |
| Day 5 AM | 2 | 4 | 2 | 2 |
| Day 5 PM | 2 | 4 | 2 | 2 |
| Day 6 AM | 2 | 4 | 2 | 2 |
| Day6PM | 2 | 4 | 2 | 2 |
| Day 7 AM | 2 | 4 | 2 | 2 |
| Day 7 PM | 2 | 4 | 2 | 2 |

The requirements of AC 05 Section 8.6.3 are such that the creep is not to exceed 0.002" (2 mils) on any one specimen within the first hour and not to exceed 0.005" (5 mils) average over the period of the test. Creep values for Mor-Melt™ R-5022 and PMRC-1 are well within those requirements, indicating the moisture reactive compositions do not adversely affect creep.

## Claims

1. An adhesive composition comprising:
(A) a moisture reactive hot melt adhesive comprising (a) one or more polymers having a weight average molecular weight between 30,000 and 100,000; (b) one or more multifunctional polyols; (c) one or more organic compounds having at least two hydroxy groups; and (d) one or more polyisocyanates; and
(B) a liquid polymeric moisture reactive diluent comprising (i) one or more polymers having a weight average molecular weight between 2000 and 4000; (ii) one or more multifunctional polyols; and (iii) one or more polyisocyanates, wherein the ratio of isocyanate groups to hydroxyl groups (NCO/OH) is between 4.0 and 11.0 and wherein the amount of free isocyanate groups is greater than 7.5% by weight, based on the total weight of the composition.

2. A method for bonding one or more substrates comprising the steps of:
(A) admixing a moisture reactive hot melt adhesive comprising (a) one or more polymers having a weight average molecular weight between 30,000 and 100,000; (b) one or more multifunctional polyols; (c) one or more organic compounds having at least two hydroxy groups; and (d) one or more polyisocyanates; and
(B) a liquid polymeric moisture reactive diluent comprising: (i) one or more polymers having a weight average molecular weight between 2000 and 4000; (ii) one or more multifunctional polyols; and (iii) one or more polyisocyanates, wherein the ratio of isocyanate groups to hydroxyl groups (NCO/OH) is between 4.0 and 11.0 and wherein the amount of free isocyanate groups is greater than 7.5% by weight, based on the total weight of the composition;
(b) heating the reactive hot melt adhesive;
(c) applying the hot melt adhesive to a first substrate in the presence of moisture;
(d) contacting the applied hot melt adhesive with at least a second substrate; and
(e) cooling the bonded hot melt adhesive.

## Patentansprüche

1. Eine Klebemittelzusammensetzung, die Folgendes beinhaltet:
(A) einen mit Feuchtigkeit reagierenden Schmelzklebstoff, beinhaltend (a) ein oder mehrere Polymere mit einem mittleren Molekulargewicht im Gewichtsmittel zwischen 30000 und 100000; (b) ein oder mehrere mehrfunktionelle Polyole; (c) eine oder mehrere organische Verbindungen mit mindestens zwei Hydroxygruppen; und (d) ein oder mehrere Polyisocyanate; und
(B) ein flüssiges polymeres mit Feuchtigkeit reagierendes Verdünnungsmittel, beinhaltend (i) ein oder mehrere Polymere mit einem mittleren Molekulargewicht im Gewichtsmittel zwischen 2000 und 4000; (ii) ein oder mehrere mehrfunktionelle Polyole; und (iii) ein oder mehrere Polyisocyanate, wobei das Verhältnis von Isocyanatgruppen zu Hydroxylgruppen (NCO/OH) zwischen 4,0 und 11,0 liegt und wobei die Menge an freien Isocyanatgruppen größer als 7,5 Gew.-%, bezogen auf das Gesamtgewicht der Zusammensetzung, ist.

2. Ein Verfahren zum Verkleben von einem oder mehreren Substraten, das die folgenden Schritte beinhaltet:
(A) Vermischen eines mit Feuchtigkeit reagierenden Schmelzklebstoffs, beinhaltend (a) ein oder mehrere Polymere mit einem mittleren Molekulargewicht im Gewichtsmittel zwischen 30000 und 100000; (b) ein oder mehrere mehrfunktionelle Polyole; (c) ein oder mehrere organische Verbindungen mit mindestens zwei Hydroxygruppen; und (d) ein oder mehrere Polyisocyanate; und
(B) eines flüssigen polymeren mit Feuchtigkeit reagierenden Verdünnungsmittels, beinhaltend: (i) ein oder mehrere Polymere mit einem mittleren Molekulargewicht im Gewichtsmittel zwischen 2000 und 4000; (ii) ein oder mehrere mehrfunktionelle Polyole; und (iii) ein oder mehrere Polyisocyanate, wobei das Verhältnis von Isocyanatgruppen zu Hydroxylgruppen (NCO/OH) zwischen 4,0 und 11,0 liegt und wobei die Menge an freien Isocyanatgruppen größer als 7,5 Gew.-%, bezogen auf das Gesamtgewicht der Zusammensetzung, ist;
(b) Erhitzen des reagierenden Schmelzklebstoffs;
(c) Aufbringen des Schmelzklebstoffs auf ein erstes Substrat in der Gegenwart von Feuchtigkeit;
(d) In-Kontakt-Bringen des aufgebrachten Schmelzklebstoffs mit mindestens einem zweiten Substrat; und
(e) Abkühlen des verklebten Schmelzklebstoffs.

## Revendications

1. Une composition adhésive comprenant :
(A) un adhésif thermofusible réactif à l'humidité comprenant (a) un ou plusieurs polymères ayant une masse moléculaire moyenne en poids comprise entre 30 000 et 100 000 ; (b) un ou plusieurs polyols multifonctionnels ; (c) un ou plusieurs composés organiques ayant au moins deux groupes hydroxy ; et (d) un ou plusieurs polyisocyanates ; et
(B) un diluant réactif à l'humidité polymérique liquide comprenant (i) un ou plusieurs polymères ayant une masse moléculaire moyenne en poids comprise entre 2 000 et 4 000 ; (ii) un ou plusieurs polyols multifonctionnels ; et (iii) un ou plusieurs polyisocyanates, dans laquelle le rapport des groupes isocyanate aux groupes hydroxyle (NCO/OH) est compris entre 4,0 et 11,0 et dans laquelle la quantité de groupes isocyanate libres est supérieure à 7,5 % en poids, rapporté au poids total de la composition.

2. Une méthode pour lier un ou plusieurs substrats comprenant les étapes consistant à :
(A) mélanger ensemble un adhésif thermofusible réactif à l'humidité comprenant (a) un ou plusieurs polymères ayant une masse moléculaire moyenne en poids comprise entre 30 000 et 100 000 ; (b) un ou plusieurs polyols multifonctionnels ; (c) un ou plusieurs composés organiques ayant au moins deux groupes hydroxy ; et (d) un ou plusieurs polyisocyanates ; et
(B) un diluant réactif à l'humidité polymérique liquide comprenant : (i) un ou plusieurs polymères ayant une masse moléculaire moyenne en poids comprise entre 2 000 et 4 000 ; (ii) un ou plusieurs polyols multifonctionnels ; et (iii) un ou plusieurs polyisocyanates, dans laquelle le rapport des groupes isocyanate aux groupes hydroxyle (NCO/OH) est compris entre 4,0 et 11,0 et dans laquelle la quantité de groupes isocyanate libres est supérieure à 7,5 % en poids, rapporté au poids total de la composition ;
(b) chauffer l'adhésif thermofusible réactif ;
(c) appliquer l'adhésif thermofusible sur un premier substrat en présence d'humidité ;
(d) mettre en contact l'adhésif thermofusible appliqué avec au moins un deuxième substrat ; et
(e) faire refroidir l'adhésif thermofusible lié.
